Europäisches Patentamt

European Patent Office

Office européen des brevets

(11) Publication number: **0 256 693 B1**

# EUROPEAN PATENT SPECIFICATION

(45) Date of publication of patent specification: **12.06.91**   (51) Int. Cl.⁵: **B23P 15/24**, B29C 33/38

(21) Application number: **87306577.5**

(22) Date of filing: **24.07.87**

(54) Mould set for plastics moulding machines.

(30) Priority: **06.08.86 GB 8619177**

(43) Date of publication of application:
**24.02.88 Bulletin  88/08**

(45) Publication of the grant of the patent:
**12.06.91 Bulletin  91/24**

(84) Designated Contracting States:
**BE DE FR NL**

(56) References cited:
**DE-A- 2 132 896**
**FR-A- 2 564 773**
**JP-A-55 011 831**
**US-A- 2 531 965**

(73) Proprietor: **Kilim, Rafael**
**150 Coles Green Road**
**Staples Corner London NW2 7JL(GB)**

(72) Inventor: **Kilim, Rafael**
**150 Coles Green Road**
**Staples Corner London NW2 7JL(GB)**

(74) Representative: **Corin, Christopher John et al**
**Mathisen Macara & Co. The Coach House 6-8**
**Swakeleys Road**
**Ickenham Uxbridge UB10 8BZ(GB)**

## Description

The invention relates to a moulding assembly for use in injection moulding of plastics material, comprising two main plates made of aluminium alloy and at least part of each of which is generally rectangular in cross-section, each respectively defining a generally planar working surface, the plates being assembled together with their working surfaces facing and parallel to each other for use in forming a mould cavity, and an ejector plate attached to one of the main plates and carrying ejector pins slidable in this main plate.

Such an assembly is shown in FR-A-2 564 773. This assembly includes a multitude of other parts, some made of aluminium alloy and others made of steel, and its manufacture requires a considerable number of assembly and machining steps. The invention aims to overcome this problem.

In accordance with the invention, therefore, such a moulding assembly is characterised in that the assembly consists essentially only of the main plates and the ejector plate, each of the main plates and the ejector plate is of constant cross-section and is produced by extrusion and cut off to length, and in that the said one plate defines longitudinally extending external surface formations produced by the extrusion and extending away from the working surface of that plate and spaced apart to support the ejector plate.

Because the moulding assembly in accordance with the invention consists substantially only of the two main plates and the ejector plate, and because each such plate is of substantially constant cross-section and produced by extrusion and cut off to length, manufacture and assembly is greatly simplified, and most of the shaped configurations of the parts can be produced by the extrusion process.

It is known from DE-A-2 132 896 to produce a mould cavity of longitudinally extending substantially constant cross-section by extrusion. However, this method cannot be used to overcome the above-mentioned problem, because the method is only suitable for producing a particular form of mould cavity. The method cannot be used to produce a moulding assembly in which any desired shape of mould cavity can afterwards be formed.

A mould set embodying the invention will now be described, by way of example only, with reference to the accompanying diagrammatic drawings in which:

Figure 1 is an end elevation, partly in cross-section, of one main component of the mould set;

Figure 2 is an end elevation, partly in cross-section, of a second main component of the mould set; and

Figure 3 is an exploded perspective assembly view showing the components of Figures 1 and 2 in their fully machined condition and ready for incorporation in an injection moulding machine.

The term "high duty aluminium alloy" is well known to the man skilled in the extrusion art and will not be further described.

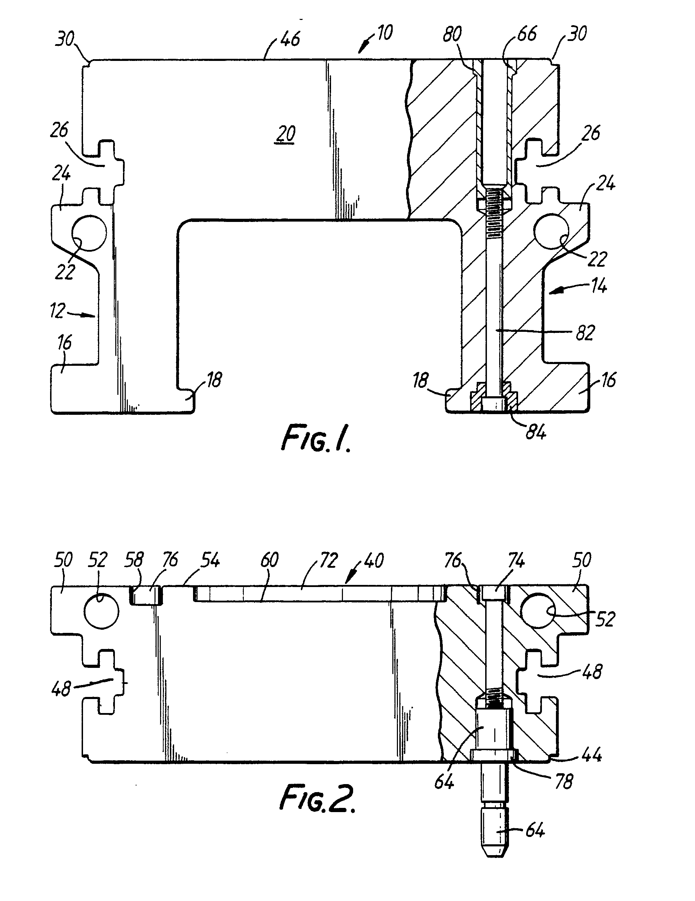

A bottom plate 10 illustrated in Figure 1 is of inverted channel section and the downwardly directed limbs 12,14 of the channel each have a mirror-symmetric arrangement of continuous flanges 16,18, the flanges 18 directed towards the inside of the channel being appreciably smaller than the flanges 16 directed outwardly of the channel. The flanges 16 will be used by clamps to hold the mould set in a moulding machine. The flanges 18 serve to support the ejector plate 70.

Each limb 12,14 acts as a riser and is joined to the transverse portion 20 of the channel section member by a radius. Outwardly, of these radiused portions, a water passage 22 is provided which, in the assembled mould set, will serve a cooling purpose. Each water passage 22 is accommodated within a projection 24, the outermost surface of which is aligned with the outermost surface of the lower, outer, flange 16 of the corresponding limb 12,14. It will be readily apparent from the Figure that the extruded section is generally mirror-symmetric about the vertical centre line and the parts have been described on this basis. In the main body or transverse portion 20 of the channel section member, cruciform grooves 26 are provided which in the assembled mould set provide a clamping facility for a side core on each side of the bottom plate.

The upper surface of the portion 20 of the channel section member has at each longitudinal edge a slight recess 30 of approximately rectangular cross-section. As will be apparent from Figure 1, the limbs 12,14 have a depth approximately equal to the depth of the main or transverse-member.

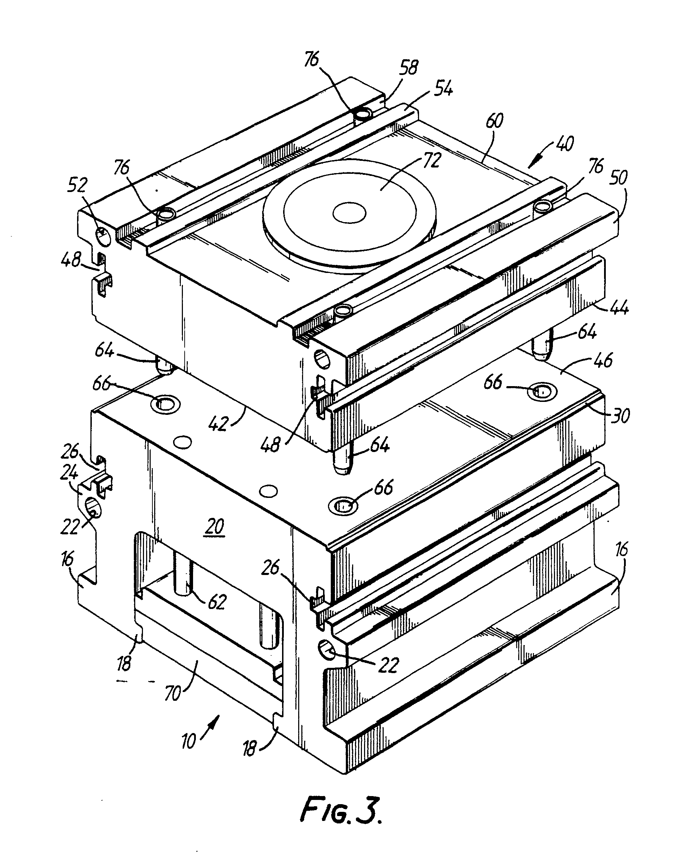

Turning now to Figure 2, a cavity plate 40 is generally of rectangular section and has a plane base surface 42 which, when assembled, engages against the upper surface of the plate 10 as indicated in Figure 3. Longitudinally extending recesses 44 match the corresponding recesses 30 of the upper-surface 46 of the plate 10.

Like the bottom plate, the cavity plate 40 has opposed cruciform section grooves 48 to provide clamping arrangements for side cores. Opposed flanges 50 at their upper surfaces form continuations of an upper surface 54 of the cavity plate and water cooling passages 52 are provided immediately adjacent but inwardly of the upper flanges of the plate. Inwardly of each of the water cooling passages a channel 58 is provided and a further, shallow, channel 60 is provided which is symmetric about the centre line.

Both the bottom plate 10 and the cavity plate 40 are extruded members of high duty aluminium alloy, each being formed by extrusion, cutting off appropriate lengths followed by finish machining. Any required bores are also machined and the main components are then assembled together. As is apparent, many of the operationally required features of the completed mould base are provided by the extrusion method, for example flanges 16,18 required for fixing and grooves for receiving side cores.

Figure 3 illustrates the bottom plate 10 and the cavity plate 40 in assembled condition with conventional return pins 62, guide pins 64 and bushes 66 receiving the guide pins. The longitudinal recess 60 has a sprue bush 72 inserted in its surface.

The guide pins 64 and guide bushes 66 are generally conventional but an example of the construction by which these parts are incorporated is illustrated in Figures 1 and 2. A screw 74 passes through a bush 76 received in the channel 58 and serves to hold the corresponding guide pin 64 in its correct location. The guide pin is provided with an annular flange 78 engaged in a complementary annular seating of the bore receiving the guide pin and by fully tightening the screw 74 the guide pin is rigidly held to the cavity plate.

The bush 66 receiving the protruding part of the guide pin 64 again has a flange 80 engaged in a seating and the bush is tightly retained by a screw 82 extending through a narrower continuation of the bore which accommodates the bush 66. The lower, head, end of the screw engages in a bush 84. For accuracy of alignment of the bottom plate and the cavity plate, all the guide pins and bushes must be absolutely rigid with the corresponding plate.

The return pins 62 are guided in bushes (not shown) received in the transverse portion 20 of the channel section. The manner of operation of the mould set will be conventional and accessories can be employed as required. In Figure 3 an ejector plate 70 is received in the recess formed below the transverse portion 20 of the bottom plate. The ejector plate will also be of an extruded high duty aluminium alloy.

By manufacturing the main components of a high duty aluminium alloy, the amount of machining eventually required is small because features of the components which are conventionally machined can readily be incorporated in the section as extruded, and it is of course readily possible to provide subsequently to extrusion the bores and passages through the components which are transverse to the direction of extrusion of the component. The final finish can be effected by spark erosion techniques or other conventional machining. If desired, water cooling holes extending in the direction of the extrusion motion may be provided during the extrusion process.

The invention is also applicable to mould set components for blow moulding machines.

All the main components hereinbefore described are made of a high duty alloy with the Alcan designation HD87 which is part of the 7000 series. Other suitable alloys are in the 2000 series and also the 7000 series. All have to be heat-treated and stretched and all have good machinability.

Alloys in the 2000 series have compositions as follows:

| Material Designation BS 1474 | Chemical Composition | | | | | | | | | |
| --- | --- | --- | --- | --- | --- | --- | --- | --- | --- | --- |
| | Si | Fe | Cu | Mn | Mg | Cr | Ni | Zn | | Ti |
| 2011 BS4300/5 | 0.40 | 0.7 | 5.0-6.0 | - | - | - | - | 0.30 | Bi 0.20-0.6 Pb 0.20-0.6 | - |
| 2014A | 0.50- | 0.50 | 3.9 | 0.40 | 0.20 | 0.10 | 0.10 | 0.25 | Zr+Ti 0.20 | 0.15 |

Alloys in the 7000 series have composition as follows:

| Material Designation BS 1474 | Chemical Composition | | | | | | | | | |
| --- | --- | --- | --- | --- | --- | --- | --- | --- | --- | --- |
| | Si | Fe | Cu | Mn | Mg | Cr | Ni | Zn | | Ti |
| 7020 BS4300/15 | 0.35 | 0.40 | 0.20 | 0.05 0.50 | 1.0 1.4 | 0.10 0.35 | - | 4.0 5.0 | Zr 0.08-0.20 Zr+Ti 0.08-0.25 | - |

The typical components illustrated will cost approximately one half of directly equivalent components of tool steel. The number of main parts, that is excluding screws, bushes, and accessories, is reduced to three.

4

Claims

1. A moulding assembly for use in injection moulding of plastics material, comprising two main plates (10,40) made of aluminium alloy and at least part of each of which is generally rectangular in cross-section, each respectively defining a generally planar working surface (42,46), the plates being assembled together with their working surfaces (42,46) facing and parallel to each other for use in forming a mould cavity, and an ejector plate (70) attached to one of the main plates (10,40) and carrying ejector pins (62) slidable in this main plate (10), characterised in that the assembly consists essentially only of the main plates (10,40) and the ejector plate (70), each of the main plates (10,40) and the ejector plate (70) is of constant cross-section and is produced by extrusion and cut off to length, and in that the said one plate (10) defines longitudinally extending external surface formations (12,14) produced by the extrusion and extending away from the working surface (46) of that plate (10) and spaced apart to support the ejector plate (70).

2. An assembly according to claim 1, characterised in that the formations on the said one plate (10) comprise integral parallel limbs (12,14) carrying flanges (18,18) directed towards each other and on which the ejector plate (70) is supported.

3. An assembly according to claim 2, characterised in that the limbs (12,14) respectively support further flanges (16,16) directed away from each other for clamping the said one plate (10) in use.

4. An assembly according to any preceding claim, characterised in that at least one of the main plates (10,40) has water passages (22) extending longitudinally therethrough which are formed by the extrusion.

5. An assembly according to any preceding claim, characterised in that each of the main plates (10,40) has, in each of its sides perpendicular to the respective working surface, a respective longitudinally extending groove (26) of cruciform section and produced by the extrusion and which provides a clamping arrangement.

6. An assembly according to any preceding claim, characterised by a sprue bush (72) in the other main plate (40) opening into a central elongate channel (60) formed on that plate (40) opposite to the working surface (42) thereof.

Revendications

1. Ensemble de moulage destiné à être utilisé dans le moulage par injection de matière plastique, comportant deux plaques principales (10, 40) réalisées en alliage d'aluminium et dont au moins une partie de chacune est de section généralement rectangulaire, chacune définissant respectivement une surface de travail généralement plane (42, 46), les plaques étant assemblées avec leurs surfaces de travail (42, 46) se faisant face et parallèles l'une à l'autre afin d'être utilisées pour la formation d'une cavité de moule, et une plaque d'éjection (70) fixée à l'une des plaques principales (10, 40) et portant des éjecteurs (62) pouvant coulisser dans cette plaque principale (10), caractérisé en ce que l'ensemble n'est essentiellement constitué que des plaques principales (10, 40) et de la plaque d'éjection (70), chacune des plaques principales (10, 40) et de la plaque d'éjection (70) est de section constante et est produite par extrusion et découpe à longueur, et en ce que la dite plaque (10) définit des structures de surface externe s'étendant longitudinalement (12, 14) produites par l'extrusion et s'étendant à l'écart de la surface de travail (46) de cette plaque (10) et espacées de façon à supporter la plaque d'éjection (70).

2. Ensemble selon la revendication 1, caractérisé en ce que les structures sur la dite plaque (10) comprennent des flancs parallèles d'un seul tenant (12, 14) portant des rebords (18, 18) dirigés l'un vers l'autre et sur lesquels est supportée la plaque d'éjection (70).

3. Ensemble selon la revendication 2, caractérisé en ce que les flancs (12, 14) supportent de manière respective d'autres rebords (16, 16) dirigés à l'écart l'un de l'autre afin de serrer la dite plaque (10) lors de l'utilisation.

4. Ensemble selon l'une quelconque des revendications précédentes, caractérisé en ce que au moins une des plaques principales (10, 40) possède des passages d'eau (22) s'étendant longitudinalement au travers de celle-ci et qui sont formés par l'extrusion.

5. Ensemble selon l'une quelconque des revendications précédentes, caractérisé en ce que chacune des plaques principales (10, 40) possède, dans chacun de ses côtés perpendiculaires à la surface de travail respective, une rainure respective s'étendant longitudinalement (26) de section cruciforme et produite par l'extrusion et qui procure un agencement de serrage.

6. Ensemble selon l'une quelconque des revendications précédentes, caractérisé par une buse d'injection (72) dans l'autre plaque principale (40) s'ouvrant dans un canal allongé central (60) formé sur cette plaque (40) à l'opposé de la surface de travail (42).

**Ansprüche**

1. Eine Formbaugruppe zur Verwendung beim Spritzformen von Plastikmaterial, welche zwei Grundplatten (10, 40), die aus Aluminium hergestellt sind, und von denen jeweils wenigstens ein Teil im wesentlichen rechteckig im Querschnitt ist, wobei jede jeweils eine im wesentlichen ebene Arbeitsoberfläche (42, 46) bildet, und die Platten mit ihren Arbeitsoberflächen (42, 46) einander gegenüberliegend und parallel zueinander zur Verwendung bei der Bildung eines Formraumes zusammengesetzt sind, und eine Auswurfplatte (70), die mit einer der Platten (10, 40) verbunden ist und Auswurfsstifte (62) trägt, welche in dieser Platte (10) verschiebbar sind, umfaßt, **dadurch gekennzeichnet,** daß die Baugruppe im wesentlichen nur aus den Grundplatten (10, 40) und der Injektorplatte (70) besteht, wobei jede von den Grundplatten (10, 40) und die Injektorplatte (70) einen konstanten Querschnitt aufweisen und durch Extrudieren und Schneiden auf Länge hergestellt sind, und daß die eine Platte (10) sich längs erstreckende äußere Oberflächenformungen (12, 14) bildet, die durch das Extrudieren hergestellt sind und sich von der Arbeitsoberfläche (46) der Platte (10) weg erstrecken und voneinander beabstandet sind, um die Auswurfplatte (70) zu halten.

2. Eine Baugruppe nach Anspruch 1, **dadurch gekennzeichnet,** daß die Formungen auf der einen Platte (10) einstückige parallele Glieder (12, 14) umfassen, welche Flansche (18, 18) tragen, die aufeinander zu gerichtet sind, und auf welchen die Auswurfplatte (70) gehalten ist.

3. Eine Baugruppe nach Anspruch 2, **dadurch gekennzeichnet,** daß die Glieder (I2, 14) jeweils ferner Flansche (16, 16) tragen, die voneinander weg gerichtet sind, zum Einspannen der einen Platte (10) im Betrieb.

4. Eine Baugruppe nach wenigstens einem der vorhergehenden Ansprüche, **dadurch gekennzeichnet,** daß wenigstens eine der Grundplatten (10, 40) sich längs hindurcherstreckende Wasserdurchgänge (22) aufweist, welche bei dem Extrudieren gebildet werden.

5. Eine Baugruppe nach wenigsten einem der vorhergehenden Ansprüche, **dadurch gekennzeichnet,** daß jede der Grundplatten (10, 40), in jeder von ihren Seiten, die senkrecht zu der jeweiligen Arbeitsoberfläche stehen, eine jeweilige sich längs erstreckende Rille (26) von kreuzförmigem Schnitt und durch das Extrudieren hergestellt aufweist, welche eine Spann- bzw. Klemmeinrichtung bilden.

6. Eine Baugruppe nach wenigstens einem der vorhergehenden Ansprüche, **gekennzeichnet durch** eine Angußbuchse (72) in der anderen Hauptplatte (40), die in einen zentralen länglichen Kanal (60) hinein öffnet, welcher auf dieser Platte (40), gegenüberliegend zu ihrer Arbeitsoberfläche (42) gebildet ist.

FIG. 1.

FIG. 2.

FIG.3.